(19) Europäisches Patentamt
European Patent Office
Office européen des brevets

(11) **EP 2 571 292 B1**

(12) **EUROPEAN PATENT SPECIFICATION**

(45) Date of publication and mention of the grant of the patent:
**30.04.2014 Bulletin 2014/18**

(51) Int Cl.:
*H04W 4/02* *(2009.01)*   *H04L 29/08* *(2006.01)*

(21) Application number: **11181003.2**

(22) Date of filing: **13.09.2011**

(54) **System and method for mobile context determination**

System und Verfahren zur mobilen Kontextbestimmung

Système et procédé de détermination de contexte mobile

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.03.2013 Bulletin 2013/12**

(73) Proprietor: **BlackBerry Limited**
**Waterloo, ON N2K 0A7 (CA)**

(72) Inventors:
 • **Oka, Anand Ravindra**
  **Waterloo, Ontario N2L 3W8 (CA)**
 • **Snow, Christopher Harris**
  **Waterloo, Ontario N2L 3W8 (CA)**
 • **Oliver, Robert George**
  **Waterloo, Ontario N2L 3W8 (CA)**
 • **Almalki, Nazih**
  **Waterloo, Ontario N2L 3W8 (CA)**

(74) Representative: **Patel, Binesh**
**Barker Brettell LLP**
**100 Hagley Road**
**Edgbaston**
**Birmingham**
**B16 8QQ (GB)**

(56) References cited:
**EP-A1- 1 176 840**   **WO-A2-01/45368**
**US-A1- 2002 188 589**   **US-A1- 2010 205 061**

**Description**

**FIELD**

The present application generally relates to context determination and, in particular, to activity classification on a mobile device.

**BACKGROUND**

Mobile devices typically have many sensors. In this discussion, sensors are elements of the mobile device that are a source of potential data regarding the device context. Context may be understood as the device's current state, which in some cases includes a current activity in which the device or device user is engaged.

Sensors can include physical sensors, like ambient light detectors or accelerometers. Sensors can also include non-traditional physical sensors like the radio chip set. Sensors may also include non-physical sensors, like the data within a calendar application.

Context modeling or, more specifically, activity classifiers, may be built by finding a model that maps sensor data to a predefined activity. Various techniques are used to build the model using training data from the sensors; however, the building of a robust model is very computationally demanding.

US Patent Pub. No. 2002/188589 (Salmenkaita et al.) is directed towards a distributed recommendation system and method for providing greater privacy of a user's private data. The method distributes the tasks of a recommendation system between a wireless device and a network server so as to protect the privacy of an end user. The method includes sending a current context-activity pair to a network server, which responds with an appropriate recommendation. The received recommendation may be filtered to identify new or significant information.

US Patent Pub. No. 2010/0205061 (Karmarkar) is directed towards creating and communicating a context-enriched message and an ad message. A context of a computing device pertaining to a message component is determined, and linked with the message component. An ad message relating to the message component is associated with the message, and the resulting context-enriched message and ad message is communicated to a recipient computing device.

EP 1176840 (Microsoft Corporation (US)) is directed towards an information service that provides search results and notifications to inform a user of a computing device when certain people are nearby so as to facilitate communications with these people. The user may define lists of people whose locations may tracked by positioning equipment based on computing devices carried by the people.

**BRIEF SUMMARY**

The present application describes methods, devices, and a server for determining mobile device context. In particular, the device is configured to receive a classifier from a server and to use the classifier to determine the device context based upon sensor data at the device. The classifier is created by the server using training data from a plurality of mobile devices, which may include the device in some embodiments. The classifier is generated based on sensor data gathered from the mobile devices plus associated activity labels.

In one aspect, the present application describes a method for determining a current state of a mobile device, as recited in claim 1.

In another aspect, the present application describes a mobile device having a processor, memory, and a stored application executable by the processor and which configures the processor to implement one or more of the methods described herein.

In yet another aspect, the present application describes a server having a processor, memory, and a stored application executable by the processor and which configures the processor to implement one or more of the methods described herein.

In yet a further aspect, the present application describes a non-transitory computer-readable medium storing executable instructions which, when executed, configure a processor to implement one or more of the methods described herein.

Other aspects and features of the present application will be understood by those of ordinary skill in the art from a review of the following description of examples in conjunction with the accompanying figures.

**BRIEF DESCRIPTION OF THE DRAWINGS**

Reference will now be made, by way of example, to the accompanying drawings which show example embodiments of the present application, and in which:

Figure 1 shows, in flowchart form, one example method for training an activity classifier.

Figure 2 shows, in flowchart form, one example method for determining mobile device state using an activity classifier.

Figure 3 shows, in flowchart form, one example method for retraining an activity classifier.

Figure 4 shows an example block diagram of one embodiment of a mobile device.

Similar reference numerals may have been used in different figures to denote similar components.

## DESCRIPTION OF EXAMPLE EMBODIMENTS

Modern mobile devices are replete with sensors. Many devices have one or more light sensors, often for sensing ambient light levels and making corresponding adjustments to display intensity. Some have a proximity sensor for determining whether an object is physically close to the speaker or microphone (often for the purpose of disabling a touchscreen when being held up to an ear during a phone conversation). Many now include kinetic sensors, like accelerometers for measuring acceleration forces, or gyroscopes. Other components may function as sensors even if their primary purpose is another function. For example, sensors may include RF antennae, including cellular, WiFi, GPS, Bluetooth™, and others. A camera is an image sensor. The microphone is a sensor. The touchscreen, keypad, or navigation device may all be considered sensors.

All of these sensors provide data that reflects the physical environment, or that gives context to the device's current state or activity.

In addition to physical sensors, modem mobile devices include a number of other data sources that can assist in determining the device state or context. For example, a clock or timer provides temporal data and a calendar application contains data regarding scheduled activity.

The determination of a device's current activity (may also be referred to as "context") can be complex. In general, the device obtains data from various sensors and attempts, using a pre-configured classifier, to identify the most likely activity that correlates to the sensor data. Developing a classifier that reasonably accurately identifies activity based on sensor data is computationally difficult. The training phase can involve significant processing power and memory storage to gather and process the volume of sensor data necessary to develop a robust classification model. Once the classifier has been trained, the detection/classification phase itself is less intensively demanding on processing resources.

Activity classification is used in a number of contexts. For example, it may be used in health care and rehabilitation to monitor patient activity and vitals, including skin temperature, mobility and movement, calorie burning, heart rate, etc. In another example, it may be used in sports and fitness analysis. In other situations, activity classification can be used to cause a device, like a handheld mobile device, to enter a particular state based on the determined activity. For example, a mobile device may be configured to determine whether it is moving in a vehicle and, if so, to use a hands-free mode. In some cases, the device may be configured to switch between a hands-free and handset mode depending on the device orientation and/or proximity sensor. There are a number of other known or potential applications for activity classification.

In accordance with one aspect of the present application, a mobile device works cooperatively with a remote server to enable activity classification. In particular, during an initial training phase, the mobile device compresses and sends sensor data to the remote server. During this training phase, the device sends the sensor data together with a selected activity identifier. A user of the mobile device may indicate the current activity or context for the device through a user interface, such as a touch screen or keypad. The device then combines the corresponding activity identifier with sensor data gathered in the course of the activity and transmits that data to the remote server. Various compression techniques may be used in some embodiments to reduce the bandwidth required to transmit the sensor data.

In some instances, the activity label or type may be selected by a user from a predefined set of available labels or types. However, in some embodiments, the device may be configured to allow a user to input a custom activity label.

The remote server receives and stores the sensor data. If compressed, then the server decodes the compressed data to recover the original data or reconstructed data (in the case of a lossy compression algorithm). The remote server may receive data from a large number of devices. The received data from a number of devices may be related to the same type or class of activity.

The remote server may be configured to combine the sensor data from a multitude of devices in order to develop a universal classifier for one or more of the activities. The universal classifier may be stored and refined over time as additional training sensor data is received from additional mobile devices.

Using the universal classifier and the stored device-specific sensor data, the remote server may generate a device-specific classifier.

If custom activity labels are provided by mobile devices, the remote server may group identical or similar labels, and thereby build a wider set of defined activities. Various thresholds may be set before a custom activity becomes sufficiently well-defined and commonplace to push it out to all devices as an available predefined activity label.

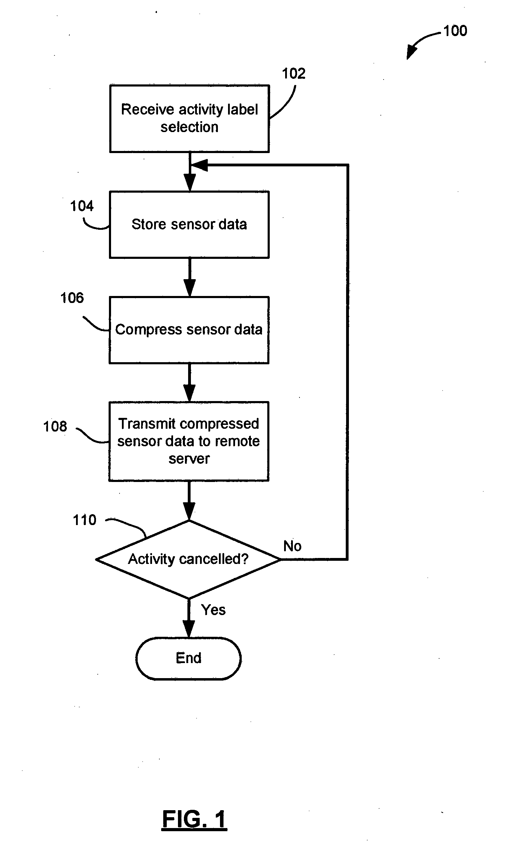

Reference will now be made to Figure 1, which shows, in flowchart form, a method 100 for training an activity classifier. The method 100 is implemented in a mobile device capable of sending and receiving data over a wireless network. The mobile device communicates with a remote server through the wireless network and possibly other networks, such as the Internet.

The mobile device includes a number of sensors, a processor, memory, and an application executable by the processor. At run-time the application configures the processor to receive selection of an activity label and to gather and transmit sensor data to the remote server. As shown in Figure 1, the method 100 includes an operation 102 of receiving an activity label selection. The selection may be received through a user interface on the device, such as a touchscreen or navigation device. The application may be configured to present the user with a list of selectable pre-defined activities via the display screen of the device. In some embodiments, the user may have the option of entering a custom activity label instead of selecting one of the predefined labels.

In operation 104, the device stores sensor data. The sensor data may include data from a wide variety of sensors. The data may be stored in a wide range of possible formats. In one case, the data is stored as a one-dimensional matrix of readings from all the available sensors. For example, the sensor data may be put into the form:

$$y = [\text{State}|\text{Accel data}|\text{Mag data}|\text{GPS data}|\text{Gyro data}|\text{Radio data}|\ldots] \quad (1)$$

In this matrix y, the State is the activity label (or an index to it). The data may include data from a variety of sensors, not all of which will be relevant to identifying the particular activity, as will be determined later in the training phase. Multiple readings may be combined to create a block or set of sensor readings/data

In another example, the State field may be multiple fields or flags, *i.e.* one field for every defined state. In the training phase, the selected state has its field or flag set to 1 while all other state flags are set to zero. In some embodiments, it may be possible to have more than one selected state at a time. For example, a person may be both "sitting" and "driving" at the same time. The flags may be single bit flags in one embodiment. In other embodiments, the fields are each real numbers so as to represent probabilities of each state. In the training phase, because the state is selected the probability of the selected state is set to 1 and the unselected states are set to 0. The number of bits allocated to each state may depend on the degree of probability accuracy/granularity desired versus the overhead cost of using multiple bits per field.

In operation 106, the stored sensor data may be compressed to create compressed sensor data. The compression may be lossless or lossy compression. As an example, the data may be converted from absolute sensor readings to differential readings; that is, an initial sensor reading may be an absolute value and subsequent data may indicate only the changes in the reading. The differential sensor data may then be encoded using an encoding scheme that compresses the data. For example, the data may be run-length encoded. In some cases, it may be encoded using a variable length coding scheme, like Huffman coding. Other coding schemes may be used.

The compressed sensor data is transmitted to the remote server in operation 108. It will be understood that the transmission of compressed sensor data may occur less frequently than the storing of sensor data in operation 104. That is, each transmission may include a block or set of readings. The transmission 108 includes both the compressed sensor data and the selected activity label with which the data is associated.

The method 100 continues to gather and send sensor data to the remote server until it detects a cancellation command in operation 110. A cancellation command may be received as a result of the user halting operation of the application. It may alternatively be received as a result of the user cancelling the activity label. In some cases, the selected activity label may be changed, which results in restarting of the method 100 so that sensor data relating to the newly-selected activity label is transmitted to the remote server. In yet other cases, the device may halt the operation after a predetermined amount of time. In this sense, "detects a cancellation command" may also be understood to include detecting a signal originating from an internal threshold or timer.

At the server, the compressed sensor data is reconstructed (decompressed, decoded, *etc.*). The server builds a database of sensor data for each of the associated activity labels. In some cases, the sensor data specific to individual devices is maintained separately and a consolidated set of sensor readings across all devices is used to generate a generic classifier. The consolidated sensor data may be compared to the individual device-specific sensor data to determine whether the generic classifier would be suitable for that device in connection with a particular activity.

Sensor data is rarely distributed randomly, although the relationships and relevance may be latent. Accordingly, the remote server may employ pattern recognition processes to identify relevant sensor data. In many embodiments, the remote server uses techniques for decomposing the consolidated sensor data to realize a more compact set of relevant data that can be used to implement a classifier. For example, Singular Value Decomposition (SVD) may be used with a matrix of data to factorize that matrix into a set of three matrices. The relevant sensor data often sits in clusters in low dimensional subspace. Accordingly, it is possible to achieve significant data compression when the relevant portion of the consolidated data is extracted.

In particular, if the consolidated sensor data is a matrix A of size $m \times n$, then SVD results in factorization of A as follows:

$$A = U * S * V^T \qquad\qquad (2)$$

In this expression, S is an $m \times n$ diagonal matrix with non-negative singular values of the original matrix A in descending order. U is an orthogonal square matrix of size $m \times m$ representing left singular vectors for the original matrix A, and V is an orthogonal square matrix of size $n \times n$ representing left singular vectors for the original matrix A. That is, U represents the row space and the transpose of V represents the column space.

The matrix U describes a complete orthogonal basis for the data in A. However, for the purposes of this disclosure, the entire basis is not needed, but rather a subspace. Accordingly, by only taking the first few columns of U the dominant subspace may be represented in a much smaller matrix. For example the subspace matrix W may be defined as the first few columns of the original U matrix. The redefinition may be based on a fixed dimensionality in some embodiments. That is, the server may be configured to select a fixed number of dimensions (*e.g.* 4). In some other embodiments, the server may decide dynamically. For example, the server may base its decision on the S matrix ranking, which can be used as an indicator of the importance of each dimension.

In one example implementation, the server looks at the diagonal elements of matrix S, which are called the singular values. The singular values are sorted in order of decreasing magnitude and the server identifies a set of those values that capture 'most' (for example, 95%, although it will be understood other thresholds may be used) of the accumulated squared magnitude ("energy"). These values may be referred to as the "dominant" singular values. The server then chooses the columns of U corresponding to those dominant singular values, where one column corresponds to one singular value. The resulting set of singular vectors is collected in a matrix, i.e. subspace matrix W, and it determines ("spans") a "principal subspace" or "dominant subspace". The dimension of this principal subspace equals the number of principal singular vectors (hence the number of columns of W), which in turn equals the number of principal singular values.

It is this subspace matrix W that represents the dominant subspace that the device may use to estimate state probabilities. Accordingly, once it has been generated, the remote server pushes this subspace matrix (or other data structure representing the dominant subspace) to the device over the wireless network.

It will be appreciated that SVD is only one available technique for compressing the consolidated sensor data and extracting the relevant portion as a smaller matrix of data, *i.e.* for obtaining a representation of the dominant subspace. Other techniques, generically referred to herein as pattern recognition or inference modeling processes, may be used to process the consolidated data at the remote server to realize a dominant subspace matrix (or other such data structure containing the relevant sensor data) for transmission to the mobile device. Whether using SVD or another inference modeling processes, the remote server develops a subspace matrix that accentuates the sensors that show informative patterns for a given activity label (*i.e.* state). By using consolidated data obtained from a large number of mobile devices, the remote server realizes a generic activity classification model (the subspace matrix) that reduces anomalies in a specific device's sensor data and improves overall quality of the classifier.

In some embodiments, the inference modeling process may be a non-linear-algebraic technique that does not lend itself to a subspace representation. It will be appreciated that the term "subspace matrix" in this respect may be broadly understood to include models that, strictly speaking, are not a subspace representation.

In some instances, the remote server may maintain separate consolidated labeled sensor data sets for different device models, since different models may contain different sensors with different characteristics. In this manner, the classifiers developed may be specific to a brand, type and version of a mobile device.

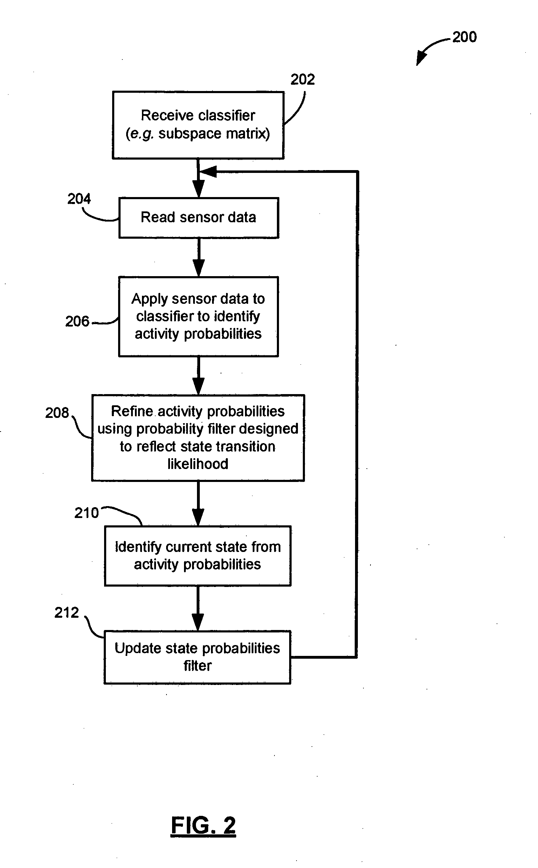

Figure 2 shows an example method 200 of activity detection on a mobile device. This example method 200 reflects the classification phase implemented at the mobile device.

The mobile device receives a subspace matrix from a remote server in operation 202. As outlined above, the subspace matrix is generated by the remote server based upon consolidated labeled sensor data from a large number of mobile devices participating in the training phase. Operation 202 may occur after the subject mobile device has participated in the training phase by providing training sensor data to the remote server. In some cases, the operation 202 may occur as part of basic provisioning of the device or as a result of an initial sign-up of the device to an activity detection system or application. Accordingly, in some cases the subspace matrix may not be based on any data supplied by the mobile device itself, but rather may be based on a consolidated data gathered from a number of other devices.

In operation 204, the device reads sensor data. As will be described below, the method 200 may be implemented in software, such as by way of a processor-executable application for activity detection. The application, in such an embodiment, may poll certain sensors. In the case of some sensors, they may be configured to output readings on a periodic basis and the application may simply register to receive the readings from the sensor. Other sensors may require that the application request or read the data from the sensor. In other words, the application may prompt the sensor to provide a reading with whatever frequency the application is configured to obtain data. The frequency of readings may be configurable by a user through a user interface for interacting with the application. In some cases, the frequency may be preset or may be restricted by the speed of a particular sensor. Not all sensors may be read at every reading.

The read sensor data may be organized into the same form as shown in expression (1) above, although the State field in the one-dimensional matrix is unknown. It may, in some cases, be set to 0 or another symbol reflecting a null value. In one example embodiment, the state field comprises a series of state fields, one for each state, each of which is set to 0.5 initially.

In operation 206, the classifier (the subspace matrix) is combined with the read sensor data to identify activity probabilities. That is, the sensor data, together with the classifier, provide probabilities that the device is in particular states. This may be realized by projecting the read sensor data onto the subspace, which results in modifications to the state field(s). In the example in which each field is initially set to 0.5, the projected sensor data will tend to increase the state field value of a more likely state towards 1.0, and will tend to decrease the state field values of less likely states towards 0.

For example, in one embodiment in which the subspace matrix is labeled W and the read sensor data is a one-dimensional matrix labeled x, the read sensor data x may be projected onto the subspace using the expression:

$$X = W (W^T * x) \tag{3}$$

In expression (3), the matrix $W^T$ is the transpose of W. The resulting matrix X is essentially a modified version of x that better fits the learned model. The matrix X results from the projection of the values of x onto the subspace defined by W. This projection takes values that were uncertain (the state values in this case) and projects them onto the subspace given all the other values, *i.e.* given the read sensor data. Thus X contains an update of the probability of the states in its state values. This process can be iterated by setting the x state values to the state values found in X and repeating the process of expression (3) until it converges on a steady state determination. It can also be updated by taking new sensor readings and using the state values from the previous X in the x matrix with the newly read values. Provided the new readings are sufficiently close in time and reflect a steady state/context, then the state values should converge to a determined state.

It will be appreciated that the expression (3) projects all values onto the subspace, and so a complete set of sensor data is not necessarily required. In fact, if data for one or more sensors is not available, the method will result in a prediction for that sensor value.

The activity probabilities may be refined in operation 208 through use of a probabilistic filter. In one case, the probabilistic filter is implemented as a Hidden Markov Model (HMM) filter. The HMM filter uses knowledge of past states and some data regarding the likelihood of certain state-to-state transitions to refine the state probabilities. For example, a state transition directly from sitting to running may be improbable, but a transition from sitting to standing and then walking may be more likely. The filter may also implement a certain amount of delay or lag to improve activity detection accuracy and reduce anomalies.

In operation 210, the mobile device identifies the current state based upon the refined activity probabilities. The device may be configured to identify the current state by setting a threshold probability level and if an activity probability reaches that threshold it becomes designated as the current state. For example, the threshold may be set to 0.75, 0.8, 0.9, *etc.* If one of the states exceeds the threshold, then it may be designated as the current state of the mobile device.

In some instances, more than one state may be likely. For example, two possible states may have probabilities greater than 0.5 or greater than another threshold. In such a case, the mobile device may attempt to resolve by reiterating the subspace projection and HMM filtering outlined above in order to assess whether one of the states is dominant. In some cases, the mobile device may not determine the state in this situation and may await a further sensor reading before determining the device state.

In yet other cases the mobile device may be configured to accept multiple states concurrently. Certain states may be "associated" or designated as "compatible". Conversely, other states may be incompatible or "mutually exclusive". For example, a state of "walking" may be compatible with a state of "listening to music", but the states "walking" and "running" may be mutually exclusive. Indeed, there may be particular states that are closely correlated, such that when the sensor data strongly indicates one state it also strongly indicates the other as well.

Once the current state (or states) is identified in operation 210, it may be stored in memory and/or output to a user interface such as the display screen. In some cases, the device may be configured to periodically send a message or other communication to a remote location reporting the current state or activity. In some cases, the device may be configured to take some action based upon the current state. For example, it may mute the speakers, dim or brighten the screen, launch, terminate, or suspend one or more applications, or other such action.

In operation 212, the mobile device may update the probabilistic filter (*e.g.* the HMM filter) if a state transition has occurred. It will be appreciated that any such update may be gradual with built-in lag.

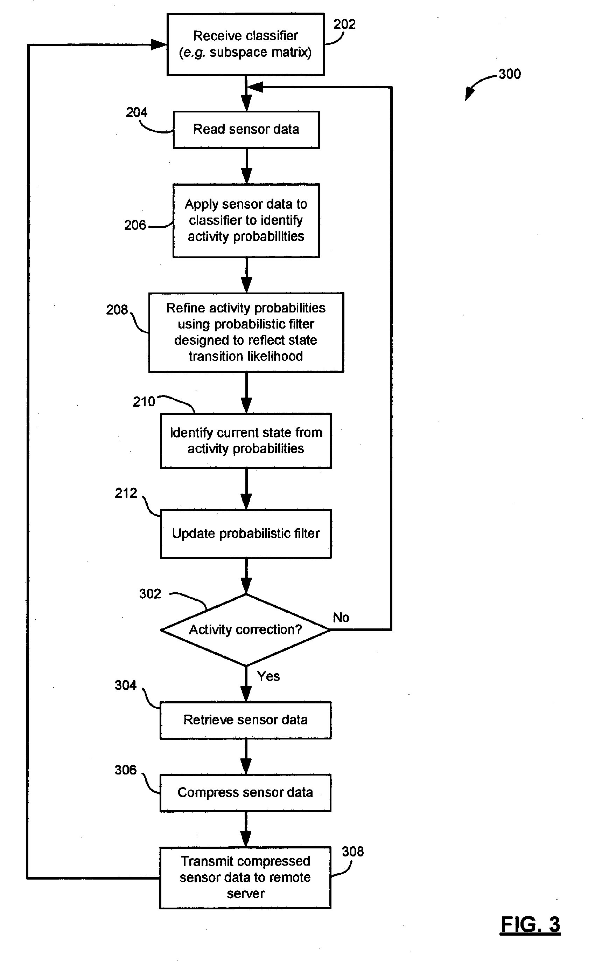

Reference is now made to Figure 3, which shows another example method 300 of activity detection. The method 300 involves the same operations as in Figure 2, but further includes determining whether an activity label correction is received. In operation 302, having displayed or otherwise output the current state (i.e. activity label) determined in operation 210, the device assesses whether the user has input or selected a corrective label. In some instances, the user may determine that the current state identified by the activity detection application in operation 210 is inaccurate and the user may select a corrected activity label. If so, then in operation 304 the device may enter a "retraining" phase similar to the training phase described above in connection with Figure 1.

In this retraining phase, the device obtains sensor data associated with the corrected activity label in operation 304. This sensor data may, in some embodiments, include stored sensor data previously obtained by the device and upon which the inaccurate activity determination was made. In this manner, the correction is applied to the actual data that resulted in the erroneous classification. In some embodiments, the device may alternatively or additionally collect new sensor data associated with the corrected activity label.

This data may then be compressed, as indicated by operation 306, and transmitted to the remote server as indicated by operation 308.

At the remote server, the new data may be used to refine or update the classifier developed for the mobile device.

The method 300 then returns to operation 202, whereupon the device may receive an updated classifier from the remote server and continue performing activity detection/classification as described above in connection with Figure 2.

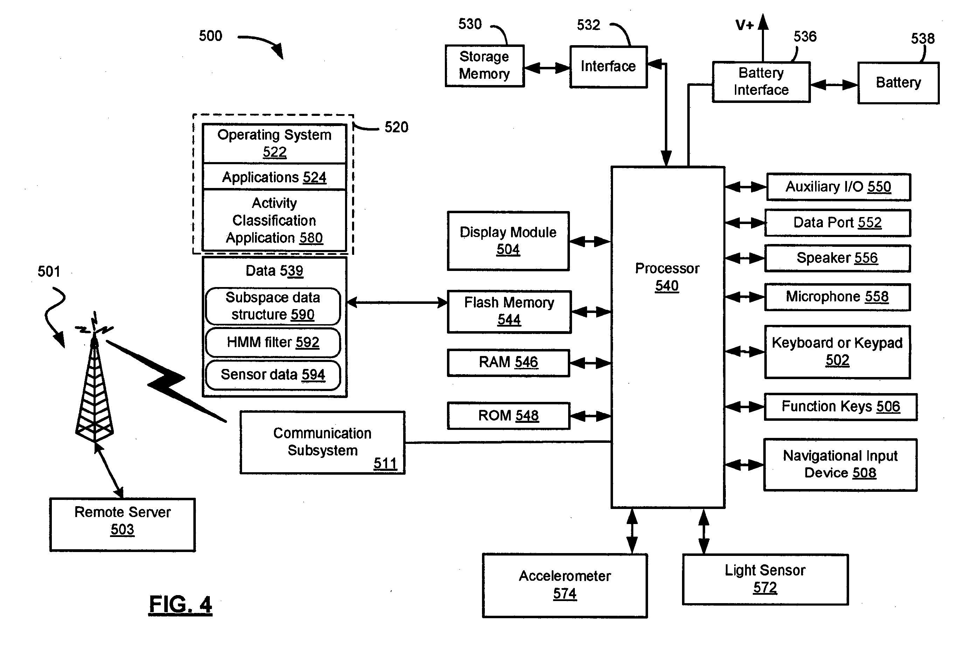

Reference is now made to Figure 4 which illustrates a block diagram of an example electronic device 500. The block diagram illustrates various electronic components which may be present in the electronic device 500.

In the illustrated embodiment, the electronic device 500 is a two-way mobile communication device having data and possibly also voice communication capabilities. The electronic device 500 has the capability to communicate with other computer systems; for example, via the Internet.

The electronic device 500 includes a controller including at least one processor 540 such as a microprocessor which controls the overall operation of the electronic device 500, and a wireless communication subsystem 511 for exchanging radio frequency signals with a wireless network 501. The processor 540 (which is to be interpreted to include multiple processors, or multi-core processors) interacts with the communication subsystem 511, which performs communication functions. That is, the communication subsystem 511 is configured to provide communication services, in some cases using a plurality of communication technologies. For example, the electronic device 500 may be equipped to communicate via any one or combination of cellular (2G, 3G, 4G and beyond), WiFi (802.11), or other wireless communication technologies. The wireless technologies may support communications such as electronic mail (e-mail), text messaging, such as short message service messaging (SMS), multimedia messaging service (MMS), instant messaging, voice-based communications, social network based messaging, Device-to-Device based messaging, or facsimile. Other communication technologies may also be employed.

The processor 540 interacts with additional device subsystems, such as the display module 504. The display module 504 is, in at least some embodiments, a touchscreen display which has a touch-sensitive overlay connected to an electronic controller. The touchscreen display acts as an input mechanism to provide a touch sensitive input device. In other example embodiments, the display module 504 may not be a touchscreen display. Instead, the electronic device 500 may include a non-touch display and one or more input mechanisms, such as, for example, a keyboard or keypad 502, one or more function keys 506 (which may be included on a key assembly), and/or a navigational input device 508, such as a trackpad or trackball.

The processor 540 interacts with additional device subsystems including flash memory 544, random access memory (RAM) 546, read only memory (ROM) 548, auxiliary input/output (I/O) subsystems 550, data port 552 such as serial data port and/or a Universal Serial Bus (USB) data port, speaker 556, microphone 558, light sensor 572, and accelerometer 574. The electronic device 500 may have other devices subsystems or components, including additional sensors.

The electronic device 500 may communicate with any one of a plurality of fixed transceiver base stations (not shown) of the wireless network 501 within its geographic coverage area. The electronic device 500 may send and receive communication signals over the wireless network 501 after a network registration or activation procedures have been completed. The electronic device 500 may communicate and exchange data with a remote server 503 via the wireless network 501.

The processor 540 operates under stored program control and executes software modules 520 stored in memory such as persistent memory; for example, in the flash memory 544. As illustrated in Figure 4, the software modules 520 include operating system software 522 and software applications 524.

The software modules 520 or parts thereof may be temporarily loaded into volatile memory such as the RAM 546. The RAM 546 is used for storing runtime data variables and other types of data or information, as will be understood by those skilled in the art. Although specific functions are described for various types of memory, this is merely one example, and those skilled in the art will appreciate that a different assignment of functions to types of memory could also be used.

The software applications 524 may include a range of other applications, including, for example, an address book application, a messaging application, a calendar application, and/or a notepad application. In some example embodiments, the software applications 524 include an email message application, a browser application, a push content viewing application, a voice communication (i.e. telephony) application, a map application, and a media player application. Each of the software applications 524 may include layout information defining the placement of particular fields and graphic elements (*e.g.* text fields, input fields, icons, *etc.*) in the user interface (*i.e.* the display module 504) according to the application.

In this example, the software modules 520 include an activity classification application 580. The activity classification application 580, when executed by the processor 540, configures the processor 540 to implement one or more of the methods or processes described herein for supplying training data to the remote server 503 and/or making an activity classification based on current sensor data and a classifier received from the remote server 503.

In some example embodiments, the auxiliary input/output (I/O) subsystems 550 may include an external communication link or interface, for example, an Ethernet connection. The electronic device 500 may include other wireless communication interfaces for communicating with other types of wireless networks; for example, a GPS transceiver for communicating with a GPS satellite network (not shown). The auxiliary I/O subsystems 550 may include a vibrator for providing vibratory notifications in response to various events on the electronic device 500 such as receipt of an electronic communication or incoming phone call, or for other purposes such as haptic feedback (touch feedback).

In some example embodiments, the electronic device 500 also includes a removable memory module 530 (typically including flash memory, such as a removable memory card) and a memory interface 532. Network access may be associated with a subscriber or user of the electronic device 500 via the memory module 530, which may be a Subscriber Identity Module (SIM) card for use in a GSM network or other type of memory card for use in the relevant wireless network type. The memory module 530 is inserted in or connected to the memory card interface 532 of the electronic device 500 in order to operate in conjunction with the wireless network 501.

The electronic device 500 stores data 539 in an erasable persistent memory, which in one example embodiment is the flash memory 544. In various example embodiments, the data 539 includes service data including information required by the electronic device 500 to establish and maintain communication with the wireless network 501. The data 539 may also include user application data such as email messages, contacts, calendar and schedule information, notepad documents, image files, and other commonly stored user information stored on the electronic device 500 by its user, and other data. The data 539 stored in the persistent memory (e.g. flash memory 544) of the electronic device 500 may be organized, at least partially, into a number of databases each containing data items of the same data type or associated with the same application. For example, email messages, contacts, and task items may be stored in individual databases within the mobile device memory.

In this example, the data 539 includes the subspace data structure 590 defining the classifier. In one example, the subspace data structure 590 includes the subspace matrix received from the remote server 503. The data 539 may further include parameters for an HMM filter 592. Sensor data 594 may also be stored prior to being compressed and transmitted to the remote server 503 during the training or retraining phases.

The electronic device 500 also includes a battery 538 as a power source, which is typically one or more rechargeable batteries that may be charged, for example, through charging circuitry coupled to a battery interface 536 such as the data port 552. The battery 538 provides electrical power to at least some of the electrical circuitry in the electronic device 100, and the battery interface 536 provides a mechanical and electrical connection for the battery 538. The battery interface 536 is coupled to a regulator (not shown) which provides power V+ to the circuitry of the electronic device 500.

It will be appreciated that the decoder and/or encoder according to the present application may be implemented in a number of computing devices, including, without limitation, servers, suitably programmed general purpose computers, set-top television boxes, television broadcast equipment, and mobile devices. The decoder or encoder may be implemented by way of software containing instructions for configuring a processor to carry out the functions described herein. The software instructions may be stored on any suitable computer-readable memory, including CDs, RAM, ROM, Flash memory, etc.

It will be understood that the encoder and decoder described herein and the module, routine, process, thread, or other software component implementing the described method/process for configuring the encoder may be realized using standard computer programming techniques and languages. The present application is not limited to particular processors, computer languages, computer programming conventions, data structures, other such implementation details. Those skilled in the art will recognize that the described processes may be implemented as a part of computer-executable code stored in volatile or non-volatile memory, as part of an application-specific integrated chip (ASIC), etc.

The foregoing description details methods, devices, and a server for determining mobile device context. In particular, the device is configured to receive a classifier from a server and to use the classifier to determine the device context based upon sensor data at the device, where context may be a current device activity. The classifier is created by the server using training data from a plurality of mobile devices, which may include the device in some embodiments. The classifier is generated based on sensor data gathered from the mobile devices plus associated activity labels provided by those mobile devices. In some of the described embodiments, the server advantageously builds the classifier, thus performing the bulk of the computationally intensive work in identifying relevant sensor data and compressing the data to realize a classifier. The device benefits from receiving a classifier that it does not need to create and that has been built through training data gathered from a large number of similar devices performing the activities that the classifier is trained to identify. In some cases, the device itself may be one of the contributors of training data to the server.

The device may compress and send sensor data to a remote server together with a selected activity label during a training phase. The remote server receives labeled sensor data from a number of devices and generates a classification model. The model may be reduced to a subspace that represents the dominant model parameters. The subspace data structure, which may be a small matrix, is transmitted to the mobile device. The mobile device uses the subspace data structure to classify device activity as indicated by the device sensors. In one example, the sensor data is projected onto the subspace matrix, which results in estimates of state probabilities for the various predefined states, the dominant one of which is selected as the current state, or estimated state.

Certain adaptations and modifications of the described embodiments can be made. Therefore, the above discussed embodiments are considered to be illustrative and not restrictive.

**Claims**

1. A method for determining a current state of a mobile device (500), the mobile device (500) having a wireless connection to a remote server (503), the method comprising:

   receiving (202) a classifier (590) from the remote server (503), wherein the classifier (590) is based upon a set of sensor data gathered by the remote server (503) during a training phase from a plurality of other mobile devices, and wherein the sensor data gathered by the remote server is associated with selected activity labels, wherein each activity label corresponds to a state of the mobile device;
   reading (204) current sensor data; and
   determining (210) a current state of the mobile device by applying (206) the classifier to the current sensor data to generate state probabilities and selecting a state value with a dominant probability as the current state.

2. The method claimed in claim 1, further comprising, during the training phase,
   obtaining (104) sensor data from a plurality of sensors within the mobile device; and
   transmitting (108) the sensor data to the remote server together with an activity identifier.

3. The method claimed in claim 2, further comprising receiving (102), through an interface of the mobile device, selection of an activity corresponding to the activity identifier.

4. The method claimed in claim 2 or claim 3, wherein transmitting the sensor data includes compressing (106) the sensor data prior to transmission.

5. The method claimed in claim 4, wherein compressing (106) the sensor data includes filtering the sensor data based on temporal changes in the sensor data.

6. The method claimed in any one of claims 1 to 5, wherein the classifier comprises a subspace matrix (590), the subspace matrix being generated by the remote server based upon consolidated labeled sensor data from a large number of mobile devices participating in the training phase, and wherein applying includes projecting the current sensor data onto the subspace matrix (590).

7. The method claimed in claim 6, wherein the current sensor data comprises a one-dimensional matrix containing sensor readings and one or more state fields, and wherein the state fields are initialized to an initial probability value.

8. The method claimed in any one of claims 1 to 7, wherein applying further includes filtering (208) the state probability using a probabilistic filter to obtain refined probabilities.

9. The method claimed in claim 8, wherein the probabilistic filter comprises a Hidden Markov Model filter.

10. The method claimed in claim 9, further comprising updating (212) the Hidden Markov Model filter based upon the current state determined for the mobile device.

11. A non-transitory computer-readable medium having stored thereon computer-readable instructions which, when executed, configure a processor to perform the method claimed in any one of claims 1 to 10.

12. A mobile device (500) comprising:

a processor (540);
a wireless communications subsystem (511) configured to communicate with a remote server (503) over a wireless connection;
a plurality of sensors (550, 558, 511, 574, 572, 508, 506, 502);
a memory (544, 546, 548); and
an application (580) stored in the memory and containing executable instructions for configuring the processor to perform the method claimed in any one claims 1 to 10.

**Patentansprüche**

1. Verfahren zum Bestimmen eines aktuellen Zustands einer Mobilvorrichtung (500), wobei die Mobilvorrichtung (500) eine Drahtlosverbindung mit einem entfernten Server (503) aufweist, wobei das Verfahren Folgendes aufweist:

Empfangen (202) eines Klassifizierers (590) von dem entfernten Server (503), wobei der Klassifizierer (590) auf einer Anzahl an Sensordaten basiert, die von dem entfernten Server (503) während einer Trainingsphase von einer Vielzahl an weiteren Mobilvorrichtungen gesammelt worden sind, und wobei die von dem entfernten Server gesammelt Sensordaten mit ausgewählten Aktivitätsbezeichnungen verknüpft sind, wobei jede Aktivitätsbezeichnung einem Zustand der Mobilvorrichtung entspricht,
Lesen (204) aktueller Sensordaten und
Bestimmen (210) eines aktuellen Zustands der Mobilvorrichtung durch Anwendung (206) des Klassifizierers auf die aktuellen Sensordaten, um Zustandswahrscheinlichkeiten zu erzeugen, und Auswählen eines Zustandswertes mit einer dominierenden Wahrscheinlichkeit als den aktuellen Zustand.

2. Verfahren nach Anspruch 1, ferner mit, während der Trainingsphase,
Erhalten (104) von Sensordaten von einer Vielzahl an Sensoren in der Mobilvorrichtung und
Übermitteln (108) der Sensordaten zusammen mit einem Aktivitätsidentifikator an den entfernten Server.

3. Verfahren nach Anspruch 2, ferner mit Empfangen (102) einer Auswahl einer Aktivität, die dem Aktivitätsidentifikator entspricht, über eine Schnittstelle der Mobilvorrichtung.

4. Verfahren nach Anspruch 2 oder 3, wobei das Übermitteln der Sensordaten ein Komprimieren (106) der Sensordaten vor der Übermittlung aufweist.

5. Verfahren nach Anspruch 4, wobei das Komprimieren (106) der Sensordaten ein Filtern der Sensordaten aufgrund zeitlicher Änderungen in den Sensordaten aufweist.

6. Verfahren nach einem der Ansprüche 1 bis 5, wobei der Klassifizierer eine Unterraummatrix (590) aufweist, wobei die Unterraummatrix von dem entfernten Server aufgrund konsolidierter bezeichneter Sensordaten von einer großen Anzahl an Mobilvorrichtungen erzeugt wird, die an der Trainingsphase teilnehmen, und wobei das Anwenden ein Projizieren der aktuellen Sensordaten auf die Unterraummatrix (590) aufweist.

7. Verfahren nach Anspruch 6, wobei die aktuellen Sensordaten eine eindimensionale Matrix aufweist, welche Sensorlesungen und ein oder mehrere Zustandsfelder aufweisen, und wobei die Zustandsfelder auf einen Anfangswahrscheinlichkeitswert initialisiert werden.

8. Verfahren nach einem der Verfahren 1 bis 7, wobei das Anwenden ferner ein Filtern (208) der Zustandswahrscheinlichkeit unter Verwendung eines Wahrscheinlichkeitsfilters aufweist, um verfeinerte Wahrscheinlichkeiten zu erhalten.

9. Verfahren nach Anspruch 8, wobei der Wahrscheinlichkeitsfilter einen Hidden-Markov-Modell-Filter aufweist.

10. Verfahren nach Anspruch 9, ferner mit Aktualisieren (212) des Hidden-Markov-Modells aufgrund des für die Mobilvorrichtung bestimmten aktuellen Zustands.

11. Nicht-flüchtiges computerlesbares Medium, das darauf computerlesbare Anweisungen gespeichert hat, die, wenn sie ausgeführt werden, einen Prozessor dazu konfigurieren, das in einem beliebigen der Ansprüche 1 bis 10 beanspruchte Verfahren durchzuführen.

12. Mobilvorrichtung (500) mit:

einem Prozessor (540),
einem Drahtloskommunikationsteilsystem (511), das dazu konfiguriert ist, über eine Drahtlosverbindung mit einem entfernten Server (503) zu kommunizieren,
einer Vielzahl an Sensoren (550, 558, 511, 574, 572, 508, 506, 502),
einem Speicher (544, 546, 548) und
einer Anwendung (580), die in dem Speicher gespeichert ist und ausführbare Anweisungen zum Konfigurieren des Prozessors, um das in einem beliebigen der Ansprüche 1 bis 10 beanspruchte Verfahren durchzuführen.

**Revendications**

1. Procédé permettant de déterminer un état actuel d'un dispositif mobile (500), le dispositif mobile (500) ayant une connexion sans fil à un serveur distant (503), le procédé comprenant le fait :

de recevoir (202) un classifieur (590) provenant du serveur distant (503), où le classifieur (590) est basé sur un ensemble de données de capteurs collectées par le serveur distant (503) pendant une phase d'apprentissage à partir d'une pluralité d'autres dispositifs mobiles, et
où les données de capteurs collectées par le serveur distant sont associées à des étiquettes d'activités sélectionnées, où chaque étiquette d'activité correspond à un état du dispositif mobile ;
de lire (204) des données de capteurs actuelles ; et
de déterminer (210) un état actuel du dispositif mobile en appliquant (206) le classifieur aux données de capteurs actuelles afin de générer des probabilités d'état et en sélectionnant une valeur d'état avec une probabilité dominante comme étant l'état actuel.

2. Procédé revendiqué dans la revendication 1, comprenant en outre, pendant la phase d'apprentissage, le fait d'obtenir (104) des données de capteurs à partir d'une pluralité de capteurs à l'intérieur du dispositif mobile ; et de transmettre (108) les données de capteurs au serveur distant conjointement avec un identifiant d'activité.

3. Procédé revendiqué dans la revendication 2, comprenant en outre le fait de recevoir (102), par l'intermédiaire d'une interface du dispositif mobile, une sélection d'une activité correspondant à l'identifiant d'activité.

4. Procédé revendiqué dans la revendication 2 ou 3, dans lequel une transmission des données de capteurs comporte une compression (106) des données de capteurs avant la transmission.

5. Procédé revendiqué dans la revendication 4, dans lequel une compression (106) des données de capteurs comporte un filtrage des données de capteurs sur la base de changements temporels dans les données de capteurs.

6. Procédé revendiqué dans l'une quelconque des revendications 1 à 5, dans lequel le classifieur comprend une matrice de sous-espace (590), la matrice de sous-espace étant générée par le serveur distant sur la base de données de capteurs étiquetées consolidées à partir d'un grand nombre de dispositifs mobiles participant à la phase d'apprentissage ; et où une application comporte la projection des données de capteurs actuelles sur la matrice de sous-espace (590).

7. Procédé revendiqué dans la revendication 6, dans lequel les données de capteurs actuelles comprennent une matrice unidimensionnelle contenant des lectures de capteurs et un ou plusieurs champ(s) d'état, et dans lequel les champs d'état sont initialisés à une valeur de probabilité initiale.

8. Procédé revendiqué dans l'une quelconque des revendications 1 à 7, dans lequel une application comporte en outre un filtrage (208) de la probabilité d'état en utilisant un filtre probabiliste pour obtenir des probabilités affinées.

9. Procédé revendiqué dans la revendication 8, dans lequel le filtre probabiliste comprend un filtre de Modèle de Markov Caché.

10. Procédé revendiqué dans la revendication 9, comprenant en outre une mise à jour (212) du filtre de Modèle de Markov Caché sur la base de l'état actuel déterminé pour le dispositif mobile.

11. Support non transitoire lisible par ordinateur ayant des instructions lisibles par ordinateur stockées sur celui-ci, qui, lorsqu'elles sont exécutées, configurent un processeur pour mettre en oeuvre le procédé revendiqué dans l'une quelconque des revendications 1 à 10.

12. Dispositif mobile (500) comprenant :

un processeur (540) ;
un sous-système de communications sans fil (511) configuré pour communiquer avec un serveur distant (503) sur une connexion sans fil ;
une pluralité de capteurs (550, 558, 511, 574, 572, 508, 506, 502) ;
une mémoire (544, 546, 548) ; et
une application (580) stockée dans la mémoire et contenant des instructions exécutables destinées à configurer le processeur pour mettre en ouvre le procédé revendiqué dans l'une quelconque des revendications 1 à 10.

100

102

Receive activity label
selection

104

Store sensor data

106

Compress sensor data

108

Transmit compressed
sensor data to remote
server

110

Activity cancelled?

No

Yes

End

**FIG. 1**

200

202

Receive classifier
(*e.g.* subspace matrix)

204

Read sensor data

206

Apply sensor data to
classifier to identify
activity probabilities

208

Refine activity probabilities
using probability filter designed
to reflect state transition
likelihood

210

Identify current state from
activity probabilities

212

Update state probabilities
filter

**FIG. 2**

Receive classifier
(*e.g.* subspace matrix) 202

300

204 Read sensor data

Apply sensor data to
classifier to identify
activity probabilities
206

208 Refine activity probabilities
using probabilistic filter
designed to reflect state
transition likelihood

210 Identify current state from
activity probabilities

212 Update probabilistic filter

302 Activity correction? — No

Yes

304 Retrieve sensor data

306 Compress sensor data

Transmit compressed
sensor data to remote
server 308

**FIG. 3**

**FIG. 4**

EP 2 571 292 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002188589 A, Salmenkaita
- US 20100205061 A, Karmarkar
- EP 1176840 A